# EUROPÄISCHE PATENTSCHRIFT

(11) **EP 3 534 079 B1**
(45) Veröffentlichungstag und Bekanntmachung des Hinweises auf die Patenterteilung: **09.11.2022**
(21) Anmeldenummer: 19158507.4
(22) Anmeldetag: 21.02.2019
(51) Int. Cl.: F24F 7/08, F24F 13/08, F24F 11/77, F24F 11/74, F24F 11/49, F24F 110/40, F24F 140/10, F24F 110/30, F24F 140/40

(54) **VERFAHREN ZUM ERMITTELN DER EINZELRAUM-LUFTVOLUMENSTRÖME BEI ZENTRALEN LÜFTUNGSSYSTEMEN UND ZUM PNEUMATISCHEN ABGLEICH VON LÜFTUNGSSYSTEMEN**
METHOD FOR DETERMINING THE INDIVIDUAL CHAMBER AIR VOLUME FLOWS IN CENTRAL VENTILATION SYSTEMS AND FOR PNEUMATICALLY MATCHING OF VENTILATION SYSTEMS
PROCÉDÉ DE DÉTERMINATION DE DÉBITS VOLUMÉTRIQUES D'UNE SEULE PIÈCE DANS DES SYSTÈMES DE VENTILATION CENTRALES ET DE RÉGLAGE PNEUMATIQUE DES SYSTÈMES DE VENTILATION

(30) Priorität: 28.02.2018 DE 102018104510
(43) Veröffentlichungstag der Anmeldung: 04.09.2019
(73) Patentinhaber: Vaillant GmbH, 42859 Remscheid (DE)
(72) Erfinder: Niebel, Julian, 51766 Engelskirchen (DE); Holger Sommer, Holger, 44388 Dortmund (DE)
(74) Vertreter: Popp, Carsten

(56) Entgegenhaltungen:
- EP-A1- 3 002 525
- DE-T2- 69 813 490
- JP-A- H0 763 404
- JP-B2- 2 884 705
- JP-B2- 3 439 908

## Beschreibung

Die Erfindung betrifft ein Verfahren zum Ermitteln von Einzelraum-Luftströmen und zur Vereinfachung des pneumatischen Abgleichs von zentralen Lüftungssystemen für Wohngebäude. Ein Wohnraumlüftungssystem besteht in der Regel aus einem zentralen Lüftungsgerät zur Rückgewinnung der Wärmeenergie der Abluft, sowie mehreren Luftein- und Luftauslässen in den verschiedenen Wohnräumen. Das Lüftungsgerät und die jeweiligen Luftein- und Luftauslässe sind über Zuluft- und einen Abluftstränge miteinander verbunden.

Ein gattungsgemäßes Lüftungssystem ist aus der Offenlegungsschrift DE 10 2017 105 857 A1 bekannt. Ein Wärmerückgewinnungsmodul ist aus dem Patent EP 2 498 014 B1 bekannt.

Aus der JP 3439908 B2, der JP H07 63404 und der JP 2884705 B2 sind Verfahren zum Ermitteln der Parameter eines PID-Reglers bekannt. Dazu werden die Druck- und Strömungsverhältnisse mit einem Gebläsesignal und einem Volumenstromsensor ermittelt.

Die EP 3 002 525 A1 offenbart ein Verfahren zum Betreiben einer Belüftungsanlage. Auf der Basis eines ermittelten Differenzdrucks wird ein geförderter Volumenstrom berechnet.

Bei der Auslegung der Wohnraumlüftung werden mit den kalkulierten Luftwechselraten die Zuluft- und die Abluftvolumenströme der einzelnen Räume der Wohnung/des Gebäudes ermittelt und auf die einzelnen Luftein- und Luftauslässe in den Räumen aufgeteilt. In einem zweiten Schritt werden die einzelnen Luftdurchlässe pneumatisch so aneinander angeglichen, dass bei dem gegebenen Gesamtvolumenstrom des Lüftungsgerätes jeder Luftein- und Luftauslass den ermittelten Luftvolumenstrom bereitstellen kann. Ein fehlerhafter pneumatischer Abgleich würde dazu führen, dass der Gesamtvolumenstrom des Lüftungsgerätes erhöht werden müsste, um jeden Raum mit dem Mindestvolumenstrom zu versorgen. Ein hoher Gesamtwirkungsgrad des Lüftungssystems wird jedoch nur erreicht, wenn der Gesamtvolumenstrom möglichst gering ist. Weitere Gefahren sind Schimmelbildung aufgrund des unzureichenden Feuchteschutzes, Geräuschentwicklung und Komfort- und Hygieneeinbußen durch eine unzureichende Bereitstellung frischer Atemluft. Daher muss dem pneumatischen Abgleich besondere Aufmerksamkeit geschenkt werden. Der pneumatische Abgleich erfolgt während der Planung durch Festlegung einer individuellen Drosselung für jeden Luftein- und Luftauslass. Da ein Messen der benötigten Größen mit hohem Aufwand verbunden ist, werden die nötigen Einstellungen der Drossel bei der Planung berücksichtigt und bei der Installation einmalig fest eingestellt. Die Drosseln werden entweder zentral im Verteiler/Sammler oder dezentral an den Luftein- und Luftauslässen angebracht. Eine Verifikation der Einstellungen wird im Regelfall nicht vorgenommen.

In der Praxis kann es vorkommen, dass aufgrund von Abweichungen zwischen Planung und baulicher Ausführung, beispielsweise längere Kanalleitungen oder weitere Einbauten wie Bögen, die tatsächlichen Druckverluste je Luftein- oder Luftauslass von den geplanten abweichen. Auch der Einfluss von Überströmöffnungen zwischen den Zuluft- und Ablufträumen ist planerisch schwer zu bestimmen. Wenn ein Luftein- oder Luftauslass, bedingt durch einen zu hohen pneumatischen Widerstand, einen zu geringen Volumenstrom an Zu- oder Abluft bereitstellen kann, wird der betroffene Raum nur unzureichend belüftet und der Gesamtvolumenstrom (oder der Arbeitsdruck des Lüftungsgerätes) muss erhöht werden.

Dies kann nur vermieden werden, wenn nach jeder Installation oder Veränderung des Wohnraumlüftungssystems ein pneumatischer Abgleich durchgeführt wird, welcher zum Ziel hat, die einzelnen pneumatischen Widerstände optimal aufeinander abzustimmen. Dabei stellt das Verfahren des pneumatischen Abgleichs sicher, dass den einzelnen Räumen die Luftvolumenströme bereitgestellt werden, die für die kalkulierten Luftwechselraten benötigt werden.

Es ist Aufgabe der Erfindung, ein einfaches und kostengünstiges Verfahren bereitzustellen, mit dem an einem bestehenden Wohnraumlüftungssystem die einzelnen pneumatischen Widerstände überprüft und korrigiert werden können und das ohne aufwändige zusätzlich zu installierende Messeinrichtungen auskommt.

Das erfindungsgemäße Verfahren zum pneumatischen Abgleich macht sich die Tatsache zu Nutze, dass in dem Wohnraumlüftungssystem ein Lüftungsgerät mit einem integrierten Luft-Volumenstrommesser und mit integrierten Sensoren zur Messung des Differenzdrucks Δp zwischen dem Anschluss der Sammelleitungen am Lüftungsgerät und der Umgebung vorgesehen sind. Dabei kann der Luft-Volumenstrom beispielsweise anhand einer Drosselblende im Gerät bestimmt werden. Dazu wird in Abhängigkeit des Differenzdrucks vor und nach der Drosselblende und dem spezifischen Druckverlust der Drosselblende der Luft-Volumenstrom berechnet. Erfindungsgemäß wird das Signal des Luft-Volumenstrommessers und der Differenzdruck Δp verwendet, um den Luft-Volumenstrom durch die einzelnen Stränge des Kanalnetzes zu bestimmen. Dazu werden in einem ersten Unterschritt das Lüftungssystem in seinen Normal-Betriebszustand versetzt, das heißt, alle Luftein- und Luftauslässe (22, 24, 26, 32, 34 36) sowie Überströmöffnungen sind unverschlossen. Der Normal-Betriebszustand zeichnet sich auch dadurch aus, dass die Türen der Räume verschlossen sind. Die Ventilatoren (7, 8) des Lüftungsgerätes werden in zumindest einem Betriebspunkt betrieben und sowohl der Differenzdruck Δp zwischen dem Anschluss der Sammelleitungen am Lüftungsgerät und der Umgebung als auch der Luft-Volumenstrom ermittelt. Anschließend wird ein beliebiger Luftein- oder Luftauslass verschlossen bzw. mit einer Blende abgedeckt und die Messung des Luft-Volumenstroms bei dem gleichen Differenzdruck Δp wiederholt. Aus der Differenz der Volumenströme lässt sich der Luft-Volumenstrom des jeweiligen Luftein- oder Luftauslasses bestimmen. Danach werden diese Unterschritte für alle Luftein- und Luftauslässe wiederholt.

Nachdem die Einzelraum-Luftvolumenströme ermittelt sind, werden daraus einzelne Kennwerte ermittelt, die dem pneumatischen Widerstand entsprechen oder mit diesem in einem Zusammenhang stehen. Diese Kennwerte werden in einem weiteren Schritt durch Verändern von Drosselwerten an Drosseln an Sollwerte angepasst.

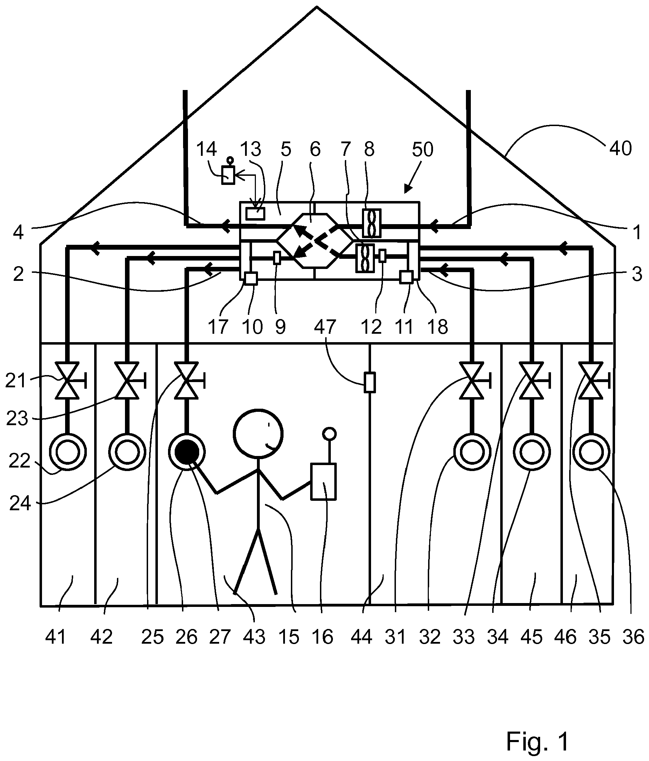

Nachfolgend wird die Erfindung anhand der Figur 1 erläutert. Die Figur 1 stellt schematisch eine Vorrichtung zum Durchführen des erfindungsgemäßen Verfahrens dar.

In einem Gebäude 40 mit mehreren Räumen 41 bis 46 ist ein zentrales Lüftungssystem 50 vorgesehen. Das zentrale Lüftungssystem 50 führt Außenluft über einen Außenluftstrang 1 mittels eines Zuluftventilators 8 dem Lüftungsgerät 5 zu und verteilt sie über einen Sammelleitungsanschluss für Zuluft 17, indem die Zuluft auf mehrere Zuluftstränge 2 verteilt wird, den einzelnen Räumen 41, 42, 43 zu. Dabei kann der Sammelleitungsanschluss für Zuluft 17 unmittelbar mit dem Lüftungsgerät 5 verbunden sein oder außerhalb des Lüftungsgeräts 5 angeordnet und mittels einer hier nicht dargestellten Verbindungsleitung mit dem Lüftungsgerät 5 verbunden sein. In den Räumen 41, 42, 43 sind Luftauslässe 22, 24, 26 vorgesehen. Diesen Luftauslässen sind jeweils Drosseln 21, 23, 25 vorgeschaltet, mit denen die den Räumen 41, 42, 43 zugeführte Luftmenge einstellbar ist.

Die Räume 44, 45, 46 sind über Lufteinlässe 32, 34, 36, Abluftsträngen 3 und den Sammelleitungsanschluss für Abluft 18, mit dem Lüftungsgerät 5 verbunden. Mit Drosseln 31, 33, 35 ist die von den Räumen 44, 45, 46 abgeführte Luftmenge einstellbar. Der Sammelleitungsanschluss für Abluft 18 kann wiederum unmittelbar mit dem Lüftungsgerät 5 verbunden sein oder er kann als externe Einheit vorgesehen sein und über eine hier nicht dargestellten Verbindungsleitung mit dem Lüftungsgerät verbunden sein. Die Abluft wird mittels eines Abluftventilators 7 im Lüftungsgerät 5 gefördert und über einen Fortluftstrang nach außen geführt. Mittels eines Wärmetauschers 6 kann die Wärme der Abluft auf die Außenluft übertragen werden und so wieder genutzt werden.

Zwischen den Räumen sind Überströmöffnungen 47 vorgesehen, durch die die Zuluft in die Räume mit Lufteinlässen 32, 34, 36 überströmen kann. In der Regel erfolgt dies mittelbar beispielsweise über einen Flur, so dass die Luft nicht direkt über eine Überströmventil-Öffnung von Raum zu Raum strömt, sondern erst von einem Zuluft-Raum 41, 42, 43 in einem hier nicht dargestellten Flur und von dort in einen Abluft-Raum 44, 45, 46. Daher ist die Überströmöffnung 47 in Figur 1 symbolisch als eine pneumatische Verbindung zwischen den Räumen anzusehen. Als Abluft-Raum wird in der Regel ein Raum mit hoher Schadstoff-, Geruchs- oder Feuchtigkeitsbelastung wie Küche, Bad, WC gewählt. Als Zuluft-Raum wird ein Raum mit hohem Frischluftbedarf wie Schlafzimmer, Wohnzimmer, Kinderzimmer gewählt.

Um eine ausgeglichene Luftzufuhr und Luftabfuhr in den einzelnen Räumen sicherzustellen, werden die Fördermengen bei Inbetriebnahme mittels Drosseln 21, 23, 25, 31, 33, 35 abgeglichen. Dazu ist es erforderlich, die durch jeden einzelnen Luftauslass 22, 24, 26 und Lufteinlass 32, 34, 36 geförderte Luftmenge zu ermitteln. Erfindungsgemäß erfolgt dies dadurch, dass zunächst bei einem Normalbetrieb der zentralen Lüftungsanlage 50, also bei Lüfterdrehzahlen der Lüfter 7, 8, wie sie im normalen Alltagsbetrieb vorgesehen sind, im Zuluft- und/oder Abluftbereich mittels Sensoren 10 und/oder 11 für Druckdifferenz zwischen den Sammelleitungsanschlüssen 17 und/oder 18 und der Umgebungsluft sowie Volumenstromsensoren 9 und/oder 12 die zugehörige Druckdifferenz und der zugehörige Volumenstrom gemessen wird.

In einem zweiten Schritt werden einzelne Luftauslässe 22, 24, 26 und Lufteinlässe 32, 34, 36 mittels einer luftdicht abschließenden Blende oder einem äquivalenten Mittel verschlossen, wobei die Drehzahl bzw. Leistung der Lüfter 8 und 7 so betrieben wird, dass sich Zuluft- und Abluftseitig dieselbe Druckdifferenz am Sammelleitungsanschluss für Zuluft oder Abluft einstellt wie zuvor gemessenen. Dabei wird der Volumenstrom mittels des Volumenstromsensors 9 oder 12 gemessen. Vorteilhaft, aber nicht notwenigerweise erfolgt die Messung mit dem Zuluft-Volumenstromsensor 9, wenn gerade ein Auslass 22, 24, 26 verschlossen ist und mit dem Abluft-Volumenstromsensor 12, wenn gerade ein Einlass 32, 34, 36 verschlossen ist. Der Vorteil ist, dass sich die Messwerte dann schneller einstellen, da im umgekehrten Fall das im Gebäude enthaltene Luftvolumen zeitverzögernd wirkt. Im stationären Fall sind jedoch Zuluft-Volumenstrom und Abluft-Volumenstrom identisch.

Die Differenz zum zuvor ermittelten Volumenstrom entspricht dem Volumenstrom, der im Normalbetrieb durch den nun verschlossenen Luftauslass 22, 24, 26 oder Lufteinlass 32, 34, 36 strömt.

Über ein drahtgebundenes oder drahtloses Endgerät 16 erhält der Bediener 15 von der Steuerung 13 des Lüftungsgerätes, welches den Ventilator 7 oder 8 in den für das erfindungsgemäßen Verfahren benötigten Betriebspunkten betreibt und die Luft-Volumenströme der jeweiligen Luftein- und Luftauslässe berechnet, Anweisungen.

Nach der nacheinander wiederholten Anwendung der beschriebenen erfindungsgemäßen Verfahrensschritte bei allen Luftein- und Luftauslässen werden bei Abweichungen der Luft-Volumenströme von den geplanten Sollwerten für die jeweiligen Luftein- und Luftauslässe die Drosseln 21, 23, 25, 31, 33, 35 ausgelegt. Die Drosseln gleichen die Differenzen der pneumatischen Widerstände der jeweiligen Luftein- und Luftauslässe aus, so dass die Verhältnisse der verschiedenen Luft-Volumenströme untereinander den Erfordernissen der Planung entsprechen.

Abschließend kann ein Protokoll der Messung und der Ermittlung der Luft-Volumenströme erstellt werden.

### Bezugszeichenliste

- 1: Außenluftstrang
- 2: Zuluftstrang
- 3: Abluftstrang
- 4: Fortluftstrang
- 5: Lüftungsgerät
- 6: Wärmetauscher
- 7: Abluftventilator
- 8: Zuluftventilator
- 9: Zuluft-Volumenstromsensor
- 10: Zuluft-Differenzdrucksensor zur Umgebungsluft
- 11: Abluft-Differenzdrucksensor zur Umgebungsluft
- 12: Abluft-Volumenstromsensor
- 13: Steuerung
- 14: Kommunikationsgerät
- 15: Bediener
- 16: Endgerät
- 17: Sammelleitungsanschluss Zuluft
- 18: Sammelleitungsanschluss Abluft
- 21: Drossel
- 22: Luftauslass
- 23: Drossel
- 24: Luftauslass
- 25: Drossel
- 26: Luftauslass
- 27: Blende

- 31: Drossel
- 32: Lufteinlass
- 33: Drossel
- 34: Lufteinlass
- 35: Drossel
- 36: Lufteinlass
- 40: Gebäude
- 41-46: Raum
- 47: Überströmöffnung
- 50: Zentrales Lüftungssystem

## Patentansprüche

1. Verfahren zum pneumatischen Abgleich bei zentralen Lüftungssystemen mit einem Lüftungsgerät (5) und mit von Sammelleitungsanschlüssen (17, 18) abzweigenden Verteilern zur Einzelraumlüftung in Gebäuden mit Räumen mit Luftein- und Luftauslässen (22, 24, 26, 32, 34 36), wobei zumindest einzelne Räume mit Türen verschließbar sind, wobei zwischen den Räumen Überströmöffnungen (47) vorgesehen sind, durch die die Zuluft von Räumen mit Luftauslässen (22, 24, 26) in die Räume mit Lufteinlässen (32, 34, 36) überströmen kann, wobei das Lüftungsgerät (5) zumindest einen Ventilator (7, 8), zumindest einen Volumenstromsensor (9, 12) zum Erfassen des geförderten Gesamt-Volumenstroms und zumindest einen Differenzdrucksensor (10, 11) zum Erfassen der Druckdifferenz zwischen der Umgebung und der Sammelleitung umfasst, **gekennzeichnet durch** die Schritte
a) Ermitteln der Kennwerte kᵢ für die Einzelraum-Luftvolumenströme durch die Unterschritte
a1) Betreiben des mindestens einen Ventilators (7, 8) in einem ersten Betriebspunkt mit unverschlossenen Luftein- und Luftauslässen (22, 24, 26, 32, 34 36), mit unverschlossenen Überströmöffnungen und verschlossenen Türen der Räume,
a2) Messen zumindest eines Differenzdrucks Δp mit einem der zumindest einen Differenzdrucksensoren (10, 11) und des zugehörigen Volumenstroms V mit zumindest einem der mindestens einen Volumenstromsensoren (9, 12),
a3) Verschließen eines Luftein- oder -auslasses i (22, 24, 26, 32, 34 36), a4) Betreiben des mindestens einen Ventilators (7, 8) in einem zweiten Betriebspunkt mit dem in Unterschritt a2) gemessenen Differenzdruck Δp,
a5) Messen des zugehörigen Volumenstroms V̇'ᵢ mit zumindest einem der mindestens einen Volumenstromsensoren (9, 12),
a6) Ermitteln und Speichern eines auf den Luftein- oder Auslass i bezogenen Kennwertes kᵢ = (V̇ - V̇'ᵢ) / V̇,
a7) Öffnen des in Unterschritt a3) verschlossenen Luftein- oder Auslasses i (22, 24, 26, 32, 3436),
a8) Wiederholung der Unterschritte a3) bis a7) für jeden weiteren Luftein- oder Auslass (22, 24, 26, 32, 34 36),
b) Vergleichen der Kennwerte kᵢ mit Soll-Kennwerten k_{i,Soll} für die Einzelraum-Luftvolumenströme,
c) Berechnen neuer Drosselwerte für Drosseln (21, 23, 25, 31, 33, 35) die den Luftein- und Luftauslässen (22, 24, 26, 32, 34 36) zugeordnet sind mit dem Ziel, dass die Einzelraum-Luftvolumenströme die Sollwerte k_{i,Soll} annehmen,
c) Verändern der berechneten neuen Drosselwerte an den Drosseln (21, 23, 25, 31, 33, 35).

## Claims

1. Method for pneumatic matching in central ventilation systems comprising a ventilation unit (5) and distributors branching off from manifold connections (17, 18) for individual room ventilation in buildings with rooms with air inlets and outlets (22, 24, 26, 32, 34, 36), wherein at least some individual rooms can be closed by doors, wherein overflow openings (47) are provided between the rooms, through which the supply air from rooms with air outlets (22, 24, 26) can overflow into the rooms with air inlets (32, 34, 36), wherein the ventilation unit (5) comprises at least one fan (7, 8), at least one volumetric flow sensor (9, 12) for detecting the total volumetric flow conveyed and at least one differential pressure sensor (10, 11) for detecting the pressure difference between the environment and the manifold, **characterised by** the steps of
a) determining the characteristic values kᵢ for the individual room air volumetric flows by means of the sub-steps
a1) Operating the at least one fan (7, 8) at a first operating point with unsealed air inlets and air outlets (22, 24, 26, 32, 34, 36), with unsealed overflow openings and sealed doors of the rooms,
a2) measuring at least one differential pressure Δp with one of the at least one differential pressure sensors (10, 11) and the associated volumetric flow V with at least one of the at least one volumetric flow sensors (9, 12),
a3) closing an air inlet or outlet i (22, 24, 26, 32, 34, 36),
a4) operating the at least one fan (7, 8) at a second operating point with the differential pressure Δp measured in substep a2),
a5) measuring the associated volumetric flow V̇'ᵢ with at least one of the at least one volumetric flow sensors (9, 12),
a6) determining and storing a characteristic value related to the air inlet or outlet ᵢ kᵢ = (V - V'i) / V
a7) opening the air inlet or outlet i (22, 24, 26, 32, 34, 36) closed in sub-step a3),
a8) repeating substeps a3) to a7) for each additional air inlet or outlet (22, 24, 26, 32, 34, 36),
b) comparing the characteristic values kᵢ with set characteristic values k_{i,set} for the individual room air volumetric flows,
c) calculating new throttle values for throttles (21, 23, 25, 31, 33, 35) assigned to the air inlets and outlets (22, 24, 26, 32, 34, 36) with the aim that the individual room air volumetric flows assume the set values k_{i,set},
d) changing the calculated new throttle values at the throttles (21, 23, 25, 31, 33, 35).

## Revendications

1. Procédé de réglage pneumatique pour des systèmes de ventilation centraux avec un appareil de ventilation (5) et avec des distributeurs divergeant des raccords de conduite de collecte (17, 18) pour la ventilation d'espace individuel dans des bâtiments avec des espaces avec des entrées et sorties d'air (22, 24, 26, 32, 34, 36), dans lequel au moins des espaces individuels sont refermables avec des portes, dans lequel entre les espaces, des ouvertures de déversement (47) sont prévues, par lesquelles l'apport d'air des espaces avec des sorties d'air (22, 24, 26) peut se déverser dans les espaces avec des entrées d'air (32, 34, 36), dans lequel l'appareil de ventilation (5) comporte au moins un ventilateur (7, 8), au moins un capteur de débit volumétrique (9, 12) pour la détection du débit volumétrique entier transporté et au moins un capteur de pression différentielle (10, 11) pour la détection de la différence de pression entre l'environnement et la conduite de collecte, **caractérisé par** les étapes consistant à
a) calculer les valeurs caractéristiques kᵢ pour les débits volumétriques d'air d'espace individuel par les sous-étapes consistant à
a1) faire fonctionner l'au moins un ventilateur (7, 8) dans un premier point de fonctionnement avec des entrées et sorties d'air non fermées (22, 24, 26, 32, 34, 36), avec des ouvertures de déversement non fermées et des portes fermées des espaces,
a2) mesurer au moins une pression différentielle Δp avec un des au moins un capteur de pression différentielle (10, 11) et du débit volumétrique V afférent avec au moins un des au moins un capteur de débit volumétrique (9, 12),
a3) fermer une entrée ou sortie d'air i (22, 24, 26, 32, 34, 36),
a4) faire fonctionner l'au moins un ventilateur (7, 8) dans un second point de fonctionnement avec la pression différentielle Δp mesurée dans la sous-étape a2),
a5) mesurer le débit volumétrique afférent *ν̇*'ᵢ avec au moins un des au moins un capteur de débit volumétrique (9, 12),
a6) calculer et enregistrer une valeur caractéristique relative à l'entrée ou la sortie d'air i kᵢ = (V̇ - V̇'i) / V̇,
a7) ouvrir l'entrée ou la sortie d'air i (22, 24, 26, 32, 34, 36) fermée dans la sous-étape a3),
a8) répéter les sous-étapes a3) à a7) pour chaque autre entrée ou sortie d'air (22, 24, 26, 32, 34, 36),
b) comparer les valeurs caractéristiques kᵢ avec des valeurs caractéristiques k_{i,de consigne} pour les débits volumétriques d'air d'espace individuel,
c) calculer de nouvelles valeurs d'étranglement pour des vannes d'étranglement (21, 23, 25, 31, 33, 35) qui sont associées aux entrées et sorties d'air (22, 24, 26, 32, 34, 36) avec l'objectif que les débits volumétriques d'air d'espace individuel adoptent les valeurs de consigne k_{i,de consigne},
d) modifier les nouvelles valeurs d'étranglement calculées au niveau des vannes d'étranglement (21, 23, 25, 31, 33, 35).
